# EUROPÄISCHE PATENTANMELDUNG

(11) **EP 3 712 000 A1**
(43) Veröffentlichungstag der Anmeldung: **23.09.2020**
(21) Anmeldenummer: 20162712.2
(22) Anmeldetag: 12.03.2020
(51) Int. Cl.: B60K 23/08, B60K 23/04, B60K 17/346, B60K 17/16, B60W 30/02

(54) **ANTRIEBSSYSTEM FÜR EIN FAHRZEUG SOWIE VERFAHREN ZUR AUTOMATISCHEN BETÄTIGUNG EINER SPERREINRICHTUNG**

(30) Priorität: 15.03.2019 DE 102019203516
(71) Anmelder: ZF Friedrichshafen AG, 88046 Friedrichshafen (DE)
(72) Erfinder: Schuster, Michael, 94157 Perlesreut (DE); Mühlbauer, Alexander, 94575 Windorf (DE)

(57) **Zusammenfassung**

In Fahrzeugen mit Verteilergetrieben kann eine Differentialsperre automatisch zugeschaltet werden. Es ist Aufgabe der Erfindung, ein Antriebssystem zu schaffen, welches sich durch ein verbessertes Betriebsverhalten auszeichnet.

Hierzu wird ein Antriebssystem 2 für ein Fahrzeug 1 mit einer Verteileranordnung 7 zur Verteilung eines Antriebsmoments auf mindestens zwei Antriebsräder 6 und/oder auf zwei Achsen 4, 5 des Fahrzeugs 1 vorgeschlagen, wobei die Verteileranordnung 7 eine Sperreinrichtung 11 zur Sperrung der Verteileranordnung 7 aufweist, mit einer Steuerungseinrichtung 13 zur Steuerung der Sperreinrichtung 11, wobei die Steuerungseinrichtung 13 ausgebildet ist, die Sperreinrichtung 11 auf Basis einer Drehzahldifferenz automatisch zu betätigen, wobei die Steuerungseinrichtung 13 ein Kommunikationsmodul 14 aufweist, das dazu ausgebildet ist, eine Statusinformation I der Sperreinrichtung 11 mit mindestens einem nachfahrenden und/oder mindestens einem vorausfahrenden Fahrzeug zu kommunizieren.

## Beschreibung

Die Erfindung betrifft ein Antriebssystem für ein Fahrzeug mit den Merkmalen des Oberbegriffs des Anspruchs 1. Ferner betrifft die Erfindung ein Verfahren zur automatischen Betätigung einer Sperreinrichtung bei einer Kolonnenfahrt von mehreren Fahrzeugen mit dem Antriebssystem.

In Fahrzeugen mit Verteilergetrieben kann eine Differentialsperre automatisch zugeschaltet werden. Hierzu weist das Fahrzeug ein Steuergerät auf, welches auf Basis von verschiedenen Umständen, z. B. Schlupf, Drehmoment, Steigung, Getriebeübersetzungen etc., sowie unter Berücksichtigung von äußeren Einflüssen, z. B. Beschleunigung, Bremsen etc., die Differentialsperre wahlweise zu- oder abschalten kann. Die Zuschaltung der Differentialsperre aufgrund von Schlupf erfolgt üblicherweise nacheilend und unter einer bestimmten Differenzdrehzahl, welche sich schädigend auf die Differentialsperre auswirken kann. Bei einer Zuschaltung der Differentialsperre aufgrund des Drehmoments und/oder der Steigung, kann bereits vor Entstehung eines Schlupfes die Sperre bei niedrigen Differenzdrehzahlen zugeschaltet werden.

Die Druckschrift DE 103 17 450 A1, die wohl den nächstkommenden Stand der Technik bildet, offenbart ein Verfahren zur selbsttätigen Steuerung von Schaltelementen zur Zuschaltung von Antriebsachsen und Sperren von Differentialen von Fahrzeugen, umfassend die folgenden Schritte:
- Erfassen von Eingangssignalen;
- Ermitteln der Fahrzeuggeschwindigkeit aus den Radgeschwindigkeiten;
- Ermitteln der Schlupfgrenzgeschwindigkeiten für die verschiedenen Schalt/Sperrelemente;
- Beseitigen der systematischen Störeinflüsse und Berechnen des Schlupfes bzw. der Ist-Schlupfgeschwindigkeit für jedes Schalt/Sperrelement;
- Vergleichen der Ist-Schlupfgeschwindigkeit mit der Schlupfgrenzgeschwindigkeit für jedes Schalt/Sperrelement;
- Auswählen der entscheidenden Schlupfgeschwindigkeiten bzw. der Schlupfgeschwindigkeiten, die für die Auslösung einer Sperre relevant sind;
- Herausfiltern des Störeinflusses von Elastizitäten im Antriebsstrang, im Reifen und von Unebenheiten der Fahrbahn auf die entscheidenden Schlupfgeschwindigkeiten und Erzeugen eines Schaltwunsches für eine Sperre, wenn ein Grenzwert erreicht wird; und
- Erzeugen eines Ansteuerungssignales für zumindest ein Schalt/Sperrelement nach Berücksichtigung weiterer Faktoren für jedes Schalt/Sperrelement.

Der Erfindung liegt die Aufgabe zugrunde, ein Antriebssystem der eingangs genannten Art zu schaffen, welches sich durch ein verbessertes Betriebsverhalten auszeichnet.

Diese Aufgabe wird erfindungsgemäß durch ein Antriebssystem mit den Merkmalen des Anspruchs 1 sowie ein Verfahren mit den Merkmalen des Anspruchs 9 gelöst. Vorteilhafte Ausgestaltungen ergeben sich aus den Unteransprüchen, den Zeichnungen und/oder der Beschreibung.

Gegenstand der Erfindung ist ein Antriebssystem, welches für ein Fahrzeug ausgebildet und/oder geeignet ist. Insbesondere dient das Antriebsystem zur Steuerung und/oder Verteilung eines Antriebsmoments in einem Antriebstrang des Fahrzeugs. Der Antriebsstrang kann mindestens oder genau eine angetriebene Vorderachse und/oder mindestens oder genau eine angetriebene Hinterachse aufweisen.

Das Antriebssystem weist eine Verteileranordnung auf, welche zur Verteilung des Antriebsmoments auf mindestens oder genau zwei Antriebsräder des Antriebstrangs und/oder zur Verteilung des Antriebsmoments auf mindestens oder genau zwei Achsen des Fahrzeugs ausgebildet und/oder geeignet ist. Insbesondere dient die Verteileranordnung zur Längsverteilung und/oder zur Querverteilung des Antriebsmoments in dem Antriebsstrang. Bevorzugt ist die Verteileranordnung hierzu antriebstechnisch mit einer Antriebsmaschine des Kraftfahrzeugs verbunden. Insbesondere ist das Fahrzeug als ein Kraftfahrzeug, vorzugsweise als ein Personenfahrzeug oder eine Arbeitsmaschine oder ein Nutzfahrzeug oder ein Militärfahrzeug, ausgebildet.

Die Verteileranordnung weist mindestens oder genau eine Sperreinrichtung auf, welche zur Sperrung der Verteileranordnung ausgebildet und/oder geeignet ist. Insbesondere dient die Sperreinrichtung zur Längssperrung und/oder Quersperrung des Antriebsstrangs. Prinzipiell können die Antriebsräder und/oder die Achsen in einem gesperrten Zustand der Verteileranordnung reibschlüssig über die mindestens eine Sperreinrichtung miteinander gekoppelt sein, sodass diese mit zumindest annährend gleicher Drehzahl, z.B. im Verhältnis 40:60 oder 33:67, angetrieben werden. Besonders bevorzugt jedoch sind die Antriebsräder und/oder die Achsen in einem gesperrten Zustand der Verteileranordnung drehfest über die mindestens eine Sperreinrichtung miteinander gekoppelt, sodass diese mit gleicher Drehzahl angetrieben werden.

Das Antriebssystem weist eine Steuerungseinrichtung auf, welche zur Steuerung der mindestens einen Sperreinrichtung ausgebildet und/oder geeignet ist. Die Steuerungseinrichtung ist vorzugsweise als ein elektronisches Steuergerät ausgebildet, welches die mindestens eine Sperreinrichtung auf Basis eines automatisierten Antriebsstrangmanagements, auch als "ADM (Automatic Drive-Train Management)" bekannt, steuert.

Die Steuerungseinrichtung ist ausgebildet, die Sperreinrichtung auf Basis einer Drehzahldifferenz automatisch zu betätigen. Insbesondere weist das Antriebsystem hierzu mehrere Drehzahlsensoren auf, welche eine Drehzahl an einer Antriebsseite und an einer Abtriebsseite der Verteileranordnung detektieren. Die Antriebseite kann als eine Antriebswelle und die Abtriebsseite als mindestens oder genau eine Abtriebswelle ausgebildet sein. Die Steuerungseinrichtung ist ausgebildet die erfassten Drehzahlen auszuwerten und bei Bedarf, insbesondere bei einem Schlupf an den Antriebsrädern, die Sperreinrichtung automatisch zuzuschalten.

Im Rahmen der Erfindung wird vorgeschlagen, dass die Steuerungseinrichtung ein Kommunikationsmodul aufweist. Insbesondere dient das Kommunikationsmodul zur drahtlosen Datenübertragung und/oder zum drahtlosen Datenaustausch mit mindestens oder genau einem weiteren Kommunikationsmodul eines weiteren Fahrzeugs. Das Kommunikationsmodul ist ausgebildet, einen Status der mindestens einen Sperreinrichtung als eine Statusinformation mit mindestens oder genau einem nachfahrenden Fahrzeug zu kommunizieren. Alternativ oder optional ergänzend ist das Kommunikationsmodul ausgebildet, einen Status der mindestens einen Sperreinrichtung als die Statusinformation mit mindestens oder genau einem vorausfahrenden Fahrzeug zu kommunizieren. Dabei ist "kommunizieren" dahingehend zu verstehen, dass ein Austausch von Daten bezüglich des aktuellen Status der jeweiligen Sperreinrichtung zwischen den einzelnen Fahrzeugen stattfinden kann. Dabei kann grundsätzlich zwischen dem Status "geschlossen" und dem Status "geöffnet" unterschieden werden. Bevorzugt erfolgt der Austausch der Statusinformation zwischen mindestens zwei Fahrzeugen während einer Kolonnenfahrt, wobei die Fahrzeuge hintereinander entlang einer Strecke fahren.

Der Vorteil der Erfindung besteht insbesondere darin, dass durch das Kommunikationsmodul die Fahrzeuge derart miteinander vernetzt werden können, sodass ein Austausch des aktuellen Status der Sperreinrichtungen zwischen den Fahrzeugen erfolgen kann. Dabei kann die Statusinformation der Sperreinrichtung des anderen Fahrzeugs herangezogen werden, um das fahrzeugeigene Antriebssystem, insbesondere die fahrzeugeigne Sperreinrichtung, zu optimieren und/oder anzupassen. In besonders vorteilhafter Weise kann die Statusinformation eines vorausfahrenden Fahrzeugs dazu verwendet werden, um eine voreilende Zuschaltung der entsprechenden Sperreinrichtung des nachfolgenden Fahrzeugs zu realisieren, sodass ein schädigender Einfluss bei der Betätigung der Sperreinrichtung unter einer hohen Drehzahldifferenz verhindert oder zumindest stark reduziert werden kann.

In einer bevorzugten Ausgestaltung der Erfindung ist vorgesehen, dass das Kommunikationsmodul ausgebildet ist, die Statusinformation der fahrzeugeigenen Sperreinrichtung an das nachfahrende und/oder das vorausfahrende Fahrzeug zu übermitteln. Besonders bevorzugt ist das Kommunikationsmodul ausgebildet die aktuelle Statusinformation der Sperreinrichtung zyklisch und/oder in zeitlich bestimmten Abständen an die anderen Fahrzeuge der Kolonne zu übermitteln. Alternativ kann das Kommunikationsmodul jedoch auch ausgebildet sein, die aktuelle Statusinformation azyklisch zu übermitteln, wobei die Statusinformation vorzugsweise nur bei einer Änderung des Status, also von dem Status "geöffnet" auf "geschlossen" oder von dem Status "geschlossen" auf "geöffnet", an die anderen Fahrzeuge der Kolonne übermittelt wird. Durch die Übermittlung der Statusinformation der fahrzeugeigenen Sperreinrichtung an die anderen Fahrzeuge der Kolonne kann gewährleistet werden, dass die anderen Fahrzeuge bei der Kolonnenfahrt auf eine geänderte Fahrsituation entsprechend frühzeitig reagieren können.

In einer Weiterbildung der Erfindung ist vorgesehen, dass das Kommunikationsmodul ausgebildet ist, eine Statusinformation einer Sperreinrichtung des nachfahrenden und/oder des vorausfahrenden Fahrzeugs zu empfangen und diese Statusinformation bei der Betätigung der fahrzeugeignen Sperreinrichtung zu berücksichtigen. Insbesondere ist die Steuerungseinrichtung ausgebildet, die fahrzeugeigene Sperreinrichtung immer dann zu betätigen, wenn mindestens eines der anderen Fahrzeuge der Fahrzeugkolonne seine Sperreinrichtung betätigt und dies als die Statusinformation an die restlichen Fahrzeuge der Kolonne übermittelt. Tritt beispielsweise an einem der Antriebsräder von einem der Fahrzeuge ein Schlupf auf, schaltet die Steuerungseinrichtung die entsprechende Sperreinrichtung automatisch zu und teilt zugleich dies den anderen Fahrzeugen der Fahrzeugkolonne über das Kommunikationsmodul mit. Aufgrund dieser Information können die Sperreinrichtungen der anderen Fahrzeuge der Kolonne durch die jeweilige Steuerungseinrichtung betätigt werden. Somit kann sichergestellt werden, dass die Verteileranordnung der anderen Fahrzeuge bereits bei einer geringen Differenzdrehzahl gesperrt werden kann.

In einer weiteren Realisierung ist vorgesehen, dass die Steuerungseinrichtung ein Berechnungsmodul aufweist. Das Berechnungsmodul ist ausgebildet, einen Streckenabschnitt zu bestimmen an dem die mindestens eine Sperreinrichtung betätigt werden soll. Vorzugsweise ist das Berechnungsmodul ausgebildet, einen Streckenabschnitt zu bestimmen an dem die Verteileranordnung vollständig oder zumindest teilweise gesperrt sein soll. Beispielsweise kann die Verteileranordnung gesperrt werden, wenn der Streckenabschnitt eine Steigung aufweist. Optional kann zudem vorgesehen sein, dass das Berechnungsmodul ausgebildet ist, einen Streckenabschnitt zu bestimmen, an dem die Verteileranordnung vollständig oder zumindest teilweise geöffnet sein soll. Beispielsweise kann die Verteileranordnung geöffnet werden, wenn der Streckenabschnitt eine Kurve aufweist. Insbesondere kann in dem Berechnungsmodul eine vor dem Fahrzeug liegende Fahrstrecke hinterlegt sein, wobei das Berechnungsmodul ausgebildet ist die Fahrstrecke zu analysieren und entsprechende Streckenabschnitte zu bestimmen an denen die Verteileranordnung gesperrt bzw. geöffnet sein soll.

Die Steuerungseinrichtung ist ausgebildet, die mindestens eine Sperreinrichtung vor Erreichen des Streckenabschnitts zu betätigen. Insbesondere kann in dem Berechnungsmodul ein Schwellenwert hinterlegt sein, wobei die Sperreinrichtung betätigt wird, wenn der Schwellenwert unterschritten wird. Optional kann zusätzlich eine Geschwindigkeit des Fahrzeugs durch das Berechnungsmodul berücksichtigt werden, sodass der Schwellenwert in Abhängigkeit der Geschwindigkeit variieren kann. Besonders bevorzugt erfolgt die Betätigung der Sperreinrichtung so weit vor dem Eintritt des Fahrzeugs in den Streckenabschnitt, sodass ein belastungsarmes Öffnen oder Sperren der Verteileranordnung durch die Sperreinrichtung umgesetzt werden kann. Somit kann eine verbesserte Betätigung der Sperreinrichtung in Abhängigkeit der Fahrstrecke umgesetzt werden.

In einer bevorzugten Weiterbildung der Erfindung ist vorgesehen, dass das Berechnungsmodul ausgebildet ist, den Streckenabschnitt basierend auf einer Statusinformation mindestens eines vorausfahrenden und/oder mindestens eines nachfahrenden Fahrzeugs und unter Berücksichtigung von fahrzeugeigenen Fahrdaten zu ermitteln. Vorzugsweise umfassen die Fahrdaten eine GPS-Position und/oder eine Fahrzeuggeschwindigkeit und/oder einen Fahrzeugabstand. Insbesondere bei längeren Kolonnen können die Positionen der einzelnen Fahrzeuge in den Berechnungsmodulen hinterlegt sein und/oder entsprechende Positionsinformationen über die Kommunikationsmodule untereinander ausgetauscht werden. Wird die Sperreinrichtung von einem der Fahrzeuge betätigt, können die anderen Fahrzeuge, insbesondere die nachfahrenden Fahrzeuge, unter Berücksichtigung der fahrzeugeigenen Fahrdaten, die Distanz zu dem Streckenabschnitt berechnen, an dem die Sperreinrichtung betätigt werden soll. Bevorzugt kann somit eine Betätigung der Sperreinrichtung in einem optimalen Bereich vor dem Streckenabschnitt erfolgen.

In einer konkreten konstruktiven Umsetzung ist vorgesehen, dass die mindestens eine Sperreinrichtung als eine Klauenkupplung ausgebildet ist. Insbesondere setzt die Klauenkupplung einen formschlüssigen Eingriff zwischen zwischen einem ersten und einem zweiten Wellenabschnitt einer Antriebswelle um. Insbesondere ist die Verteileranordnung als ein Allradantrieb, im Speziellen als ein zuschaltbarer Allradantrieb, ausgebildet, wobei die Klauenkupplung als eine Allradkupplung ausgebildet ist. Dabei kann eine Antriebsmaschine des Fahrzeugs permanent auf mindestens eine der Achsen wirken, wobei über die Allradkupplung zusätzlich mindestens oder genau eine weitere Achse zugeschaltet werden kann.

Es ist bevorzugt vorgesehen, dass die Betätigung der als Klauenkupplung ausgebildeten Sperreinrichtung, möglichst ohne Belastung erfolgt. Dies ist immer dann der Fall, wenn die Drehzahldifferenz zwischen den Wellenabschnitten möglichst gering ist. Durch die voreilende Betätigung der Sperreinrichtung, kann somit die Betätigung der Klauenkupplung optimiert werden, sodass eine Beschädigung bzw. ein schädigender Einfluss der Klauenkupplung stark reduziert werden kann.

In einer alternativ oder optional ergänzenden Ausgestaltung weist die Verteileranordnung mindestens oder genau ein Differentialgetriebe auf. Das Differentialgetriebe kann als ein Achsdifferential, insbesondere als ein Vorderachs- oder Hinterachsdifferential, ausgebildet sein. Das Achsdifferential ist vorzugsweise ausgebildet, das Antriebsmoment auf zwei Antriebsräder einer Achse zu verteilen. Alternativ ist das Differentialgetriebe als ein Zentraldifferential ausgebildet. Das Zentraldifferential ist vorzugsweise ausgebildet, das Antriebsmoment auf mindestens oder genau zwei Achsen, insbesondere auf jeweils ein zugehöriges Achsdifferential, des Antriebstrangs zu verteilen.

Die Sperreinrichtung ist als eine Differentialsperre ausgebildet, welche zur Sperrung des Differentialgetriebes ausgebildet und/oder geeignet ist. Insbesondere dient die Steuerungseinrichtung zur automatischen Steuerung von Schaltfunktionen der Differentialsperre des Differentialgetriebes. Prinzipiell kann die Differentialsperre als eine Kupplungseinrichtung ausgebildet, wobei in einem geöffneten Zustand der Kupplungseinrichtung, das Differentialgetriebe eine Drehzahl an den Antriebsrädern ausgleicht und in einem geschlossenen Zustand der Kupplungseinrichtung das Differentialgetriebe gesperrt ist oder zumindest ein Bremsmoment erzeugt ist. Besonders bevorzugt ist die Differentialsperre als die Klauenkupplung ausgebildet, wobei die Klauenkupplung in dem Achsdifferential zur drehfesten Kupplung der beiden Antriebsräder und/oder in dem Zentraldifferential zur drehfesten Kupplung einer Antriebswelle zwischen den mindestens oder genau zwei Achsen ausgebildet und/oder geeignet sein.

Es ist besonders bevorzugt vorgesehen, dass die Verteileranordnung mehrere der Sperreinrichtungen aufweist. Insbesondere weist die Verteileranordnung mindestens eine Sperreinrichtung zur Längssperrung und mindestens eine Sperreinrichtung zur Quersperrung des Antriebsstrangs auf. Besonders bevorzugt weist die Verteileranordnung mehrere der Differentialgetriebe auf, wobei jedem der Differentialgetriebe jeweils eine separate Sperreinrichtung, vorzugsweise Differentialsperre, zugeordnet ist. Beispielsweise weist die Verteileranordnung ein Vorderachsdifferential und mindestens ein Hinterachsdifferential auf, wobei die jeweils zugehörige Differentialsperre zur Quersperrung des Antriebsstrangs dient. Optional ergänzend weist die Verteileranordnung das Zentralgetriebe auf, wobei die zugehörige Differentialsperre zur Längssperrung der beiden Achsdifferentiale dient. Alternativ weist die Verteileranordnung die Allradkupplung auf, wobei die Allradkupplung zur Längssperrung der beiden Achsdifferentiale dient.

Die Steuerungseinrichtung ist ausgebildet, die Sperreinrichtungen auf Basis einer Drehzahldifferenz automatisch zu betätigen. Bevorzugt ist die Steuerungseinrichtung zur Steuerung der mehreren, insbesondere aller Sperreinrichtungen ausgebildet und/oder geeignet. Bevorzugt ist die Steuerungseinrichtung ausgebildet, die mehreren Sperreinrichtungen wahlweise nach Bedarf oder nacheinander basierend auf einer festgelegten Schaltlogik oder zeitgleich zu betätigen. Das Kommunikationsmodul ist ausgebildet ist, jeweils den Status der einzelnen Sperreinrichtungen als Statusinformation mit dem mindestens einem nachfahrenden und/oder dem mindestens einem vorausfahrenden Fahrzeug zu kommunizieren. Insbesondere beinhaltet die Statusinformation den zugehörigen Status und/oder eine Änderung des Status zu jeder Sperreinrichtung.

Ein weiterer Gegenstand der Erfindung betrifft ein Verfahren zur automatischen Betätigung der mindestens einen Sperreinrichtung während einer Kolonnenfahrt von mehreren Fahrzeugen mit dem Antriebssystem wie dieses bereits zuvor beschrieben wurde. Insbesondere ist unter Kolonnenfahrt zu verstehen, dass alle Fahrzeuge hintereinander, vorzugsweise gleichmäßig beabstandet voneinander und/oder mit gleicher Geschwindigkeit, entlang einer festgelegten Fahrstrecke fahren. Insbesondere weist jedes der Fahrzeuge das beschriebene Antriebssystem auf, wobei die Fahrzeuge über die Kommunikationsmodule miteinander vernetzt sind.

Wird auf Basis einer Drehzahldifferenz die Sperreinrichtung der Verteileranordnung von einem der Fahrzeuge automatisch betätigt, kommuniziert das entsprechende Fahrzeug dies als eine Statusinformation an mindestens oder genau ein nachfahrendes und/oder an mindestens oder genau ein vorausfahrendes Fahrzeug der Kolonne. Besonders bevorzugt kommuniziert das Fahrzeug die Statusinformation an alle beteiligten Fahrzeuge der Fahrzeugkolonne. Insbesondere basiert die Drehzahldifferenz auf einer Änderung der Fahrstrecke, z. B. Steigung, Glatteis etc. Auf Basis der Statusinformation, können zumindest die anderen Fahrzeuge, vorzugsweise zumindest die nachfahrenden Fahrzeuge, ihre Sperreinrichtung betätigen. Die Betätigung der Sperreinrichtung kann dabei zeitgleich oder zeitversetzt erfolgen. Insbesondere erfolgt die Betätigung der Sperreinrichtung der nachfahrenden Fahrzeuge bevor eine entsprechende Drehzahldifferenz auftritt bzw. der Streckenabschnitt erreicht ist an dem die Sperreinrichtung betätigt werden muss.

In einer Konkretisierung ist vorgesehen, dass ein die Kolonne anführendes Fahrzeug als ein "Master"-Fahrzeug festgelegt wird. Insbesondere wird zu Beginn der Kolonnenfahrt festgelegt, welches Fahrzeug zuerst die Fahrstrecke befährt und somit als "Master"-Fahrzeug fungiert. Diese Information wird vorzugsweise in der Steuerungseinrichtung hinterlegt und kann über das Kommunikationsmodul den anderen, insbesondere den nachfahrenden Fahrzeugen, mitgeteilt werden. Dabei kann vorgesehen sein, dass das Kommunikationsmodul des "Master"-Fahrzeugs als ein Sendergerät und die Kommunikationsmodule der nachfahrenden Fahrzeuge als Empfängergeräte ausgebildet sind. Im Speziellen kann die Kommunikation der Fahrzeuge untereinander mittels eines Master/Slave -Prinzips umgesetzt sein, wobei die nachfahrenden Fahrzeuge als "Slave"-Fahrzeuge fungieren.

Das "Master"-Fahrzeug übermittelt die Statusinformation seiner Sperreinrichtung an alle nachfahrenden Fahrzeuge, wobei bei einer Betätigung der Sperreinrichtung des "Master"-Fahrzeugs, die Sperreinrichtungen der nachfahrenden Fahrzeuge automatisch betätigt werden. Vorzugsweise sendet das Kommunikationsmodul des "Master"-Fahrzeugs den aktuellen Status seiner Sperreinrichtung zyklisch zu den anderen Fahrzeugen der Kolonne. In dem Fall das an dem "Master"-Fahrzeug eine Drehzahldifferenz in der Verteileranordnung und/oder eine Änderung der Fahrstrecke detektiert wird oder ein anderes Ereignis die Sperreinrichtung zuschaltet, wird dies als die Statusinformation von dem "Master"-Fahrzeug an alle nachfahrenden Fahrzeuge gesendet. Aufgrund dieser Information aktivieren auch die anderen Fahrzeuge der Kolonne die Sperreinrichtung, sodass die Sperreinrichtung der nachfahrenden Fahrzeuge bei niedrigen Differenzdrehzahlen und/oder lastfrei zugeschaltet werden kann.

In einer alternativen oder optional ergänzenden Ausführung ist vorgesehen, dass alle Fahrzeuge untereinander kommunizieren. Insbesondere sind alle Fahrzeuge derart untereinander vernetzt, sodass kein "Master"-Fahrzeug definiert werden muss. Dabei kann vorgesehen sein, dass die Kommunikationsmodule jedes Fahrzeugs der Kolonne sowohl als ein Sendergerät als auch ein Empfängergerät ausgebildet und/oder geeignet sind. Im Speziellen kann die Kommunikation der Fahrzeuge untereinander mittels eines Vollduplex-Verfahrens oder eines Dual-Simplex-Verfahrens umgesetzt sein.

Bei einer Betätigung der Sperreinrichtung von einem der Fahrzeuge, übermittelt das entsprechende Fahrzeug den Status seiner Sperreinrichtung an alle anderen Fahrzeuge, woraufhin die Sperreinrichtungen der nachfahrenden und/oder der vorausfahrenden Fahrzeuge automatisch betätigt werden. In dem Fall das an einem der Fahrzeuge eine Drehzahldifferenz in der Verteilanordnung oder ein anderes Ereignis die Sperreinrichtung zuschaltet, wird dies als die Statusinformation an die anderen Fahrzeugen mitgeteilt. Aufgrund dieser Information können die anderen Fahrzeuge der Kolonne in Abhängigkeit der fahrzeugeignen Fahrdaten, insbesondere auf Basis der jeweiligen Position in der Kolonne, entscheiden ob die fahrzeugeigene Sperreinrichtung zugeschaltet werden muss. Besonders bevorzugt kann auf Basis der Position bestimmt werden, ob das Fahrzeug in der Kolonne vor oder nach dem Fahrzeug angeordnet ist, welches die Sperreinrichtung ausgelöst hat.

In einer weiteren Konkretisierung ist vorgesehen, dass bei einer Betätigung der Sperreinrichtung ein Streckenabschnitt durch die nachfahrenden Fahrzeuge bestimmt wird, an dem die Sperreinrichtung betätigt werden soll. Insbesondere kann jedes der nachfahrenden Fahrzeuge unter Berücksichtigung der fahrzeugeigenen Fahrdaten die Distanz zu dem Streckenabschnitt berechnen. Beispielsweise kann anhand der fahrzeugeigenen Drehzahl und/oder Geschwindigkeit die Distanz zu dem Streckenabschnitt sowie die Länge des Streckenabschnitts berechnet werden, an dem die Sperreinrichtung betätigt werden soll. Die Berechnungsmodule können somit für jedes Fahrzeug einzeln berechnen, wann und wie lange die zugehörige Sperreinrichtung betätigt werden muss. Zudem kann bei mehreren Sperreinrichtungen der Verteileranordnung durch das Berechnungsmodul festgelegt werden, welche Sperreinrichtung, insbesondere Differentialsperre und/oder Allradkupplung, betätigt werden muss. Die Steuerungseinrichtung betätigt vor Erreichen des Streckenabschnitts die Sperreinrichtung, sodass eine Betätigung in einem optimalen Bereich vor dem Streckenabschnitt erfolgt, an dem die Drehzahldifferenz der zugehörigen Verteileranordnung möglichst gering ist.

Nachfolgend wird die vorliegende Erfindung anhand der Zeichnung weiter erläutert, wobei weitere Vorteile, Merkmale und Wirkungen der Figurenbeschreibung zu entnehmen sind. Es zeigen:
- Figur 1: schematische Darstellung eines Fahrzeugs mit einem Antriebssystem als ein Ausführungsbeispiel der Erfindung;
- Figur 2: schematische Darstellung einer Fahrzeugkolonne mit mehreren der Fahrzeuge aus der Figur 1;
- Figur 3: Ablaufdiagramm eines Verfahrens zur automatischen Betätigung einer Sperreinrichtung des Antriebssystems aus Figur 1.

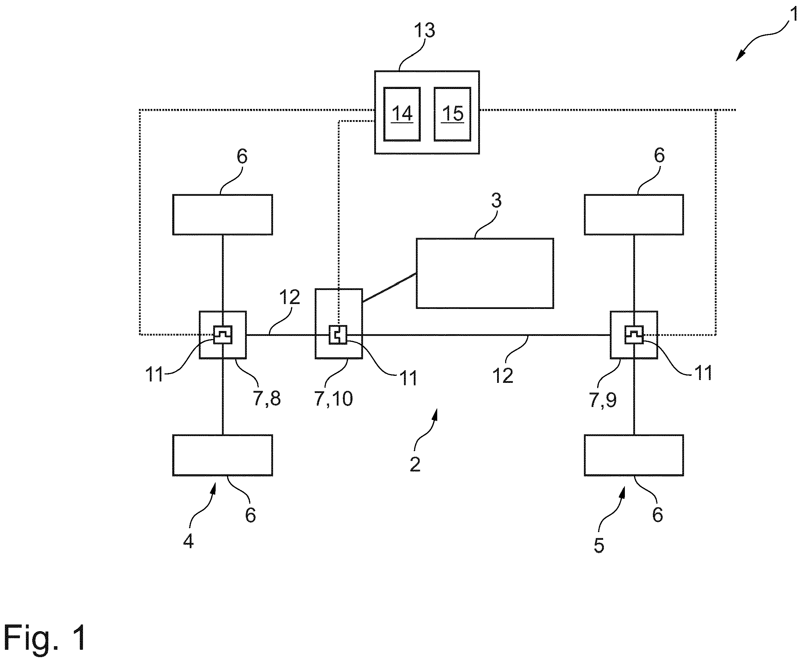

Figur 1 zeigt in einer stark schematisierten Darstellung ein Fahrzeug 1 mit einem Antriebsystem 2. Beispielsweise ist das Fahrzeug 1 als ein Lastkraftwagen, Personenkraftwagen, Baustellenfahrzeug, Landmaschine oder Radpanzer ausgebildet. Das Antriebsystem 2 dient zur Verteilung und Steuerung eines durch eine Antriebsmaschine 3 erzeugten Antriebsmoments auf eine Vorderachse 4 und mindestens eine Hinterachse 5. Beispielsweise ist die Antriebsmaschine 3 als ein Elektromotor und/oder Verbrennungsmotor ausgebildet.

Die Vorderachse 4 und die Hinterachse 5 weisen jeweils zwei Fahrzeugräder 6 auf, welche über eine Verteileranordnung 7 antriebstechnisch mit der Antriebsmaschine 3 verbunden sind. Die Verteileranordnung 7 weist ein Vorderachsdifferential 8 zur Verteilung des Antriebsmoments auf die Fahrzeugräder 6 der Vorderachse 4 und ein Hinterachsdifferential 9 zur Verteilung des Antriebsmoments auf die Fahrzeugräder 6 der Hinterachse 5 auf. Zudem weist die Verteileranordnung 7 ein Zentraldifferential 10 auf, welches zur Verteilung des Antriebsmoments auf die Vorderachse 4 und die Hinterachse 5 dient.

Das Vorderachsdifferential 8, das Hinterachsdifferential 9 und das Zentraldifferential 10 weisen jeweils eine Sperreinrichtung 11 auf, welche zur Sperrung der Verteileranordnung 7 dienen. Die Sperreinrichtungen 11 sind beispielsweise jeweils als eine Differentialsperre ausgebildet. In einem geöffneten Zustand der Sperreinrichtung 11 des Vorderachsdifferentials 8 bzw. des Hinterachsdifferential 9 kann eine Drehzahl an den Antriebsrädern 6 ausgeglichen werden. In einem geöffneten Zustand der Sperreinrichtung 11 des Zentraldifferentials 10 kann eine Drehzahl zwischen den beiden Achsen 4, 5 ausgleichen werden. In einem geschlossenen Zustand der Sperreinrichtung 11 des Vorderachsdifferentials 8 bzw. des Hinterachsdifferentials 9 sind die Antriebsräder 6 drehfest miteinander gekoppelt, sodass die beiden Antriebsräder 6 der Vorderachse 4 bzw. der Hinterachse 5 mit gleicher Drehzahl abrollen. In einem geschlossenen Zustand der Sperreinrichtung 11 des Zentraldifferentials 10 ist eine die beiden Achsen 4, 5 verbindende Antriebswelle 12 starr gekoppelt, sodass ein Allradantrieb umgesetzt und die beiden Achsen 4, 5 mit der gleichen Drehzahl/Drehmoment angetrieben werden. Die Sperreinrichtungen 11 sind beispielsweise jeweils als eine Klauenkupplung ausgebildet, welche beispielsweise jeweils über einen separaten Aktuator elektromechanisch und/oder pneumatische und/oder hydraulisch betätigt werden können.

Das Antriebsystem 2 weist eine Steuerungseinrichtung 13 auf, wobei die Steuerungseinrichtung 13 ausgebildet ist, die Sperreinrichtungen 11 auf Basis einer Drehzahldifferenz automatisch zu betätigen. Die Steuerungseinrichtung 13 ist beispielsweise als ein ADM2-System ausgebildet, welches selbstständig einen Schlupf an den Fahrzeugrädern 6 erkennt und wahlweise das Vorderachsdifferential 8, das Hinterachsdifferential 9 und/oder das Zentraldifferential 10 sperren kann. Zudem kann die Steuerungseinrichtung 13 ausgebildet sein, die jeweiligen Sperreinrichtungen 11 unter Berücksichtigung eines Motordrehmoments der Antriebsmaschine 3 und/oder unter Berücksichtigung einer Steigung in der vor dem Fahrzeug 1 liegenden Fahrbahn, die entsprechenden Sperreinrichtungen 11 bereits vor Entstehung des Schlupfes bei einer niedrigen Differenzdrehzahlen zuzuschalten.

Die Steuerungseinrichtung 13 weist ein Kommunikationsmodul 14 auf, wobei das Kommunikationsmodul 14 ausgebildet ist, eine Information über den Status der einzelnen Sperreinrichtungen 11 an mindestens ein nachfahrendes Fahrzeug, nicht dargestellt, zu übermitteln. Zudem kann das Kommunikationsmodul 14 ausgebildet sein, eine Statusinformation der Sperreinrichtungen eines vorausfahrenden Fahrzeugs, nicht dargestellt, zu empfangen, wobei die Steuerungseinrichtung 13 diese Statusinformation bei einer Betätigung der fahrzeugeigenen Sperreinrichtungen 11 berücksichtigen kann.

Ferner weist die Steuerungseinrichtung 13 ein Berechnungsmodul 15 auf, wobei das Berechnungsmodul 15 ausgebildet ist, einen Streckenabschnitt zu berechnen, an dem mindestens eine oder alle Sperreinrichtungen 11 betätigt werden müssen. Das Berechnungsmodul 15 kann dabei ausgebildet sein, einen Streckenabschnitt zu bestimmen an dem zumindest eines der Differentialgetriebe 8, 9, 10 gesperrt und/oder geöffnet sein soll. Beispielsweise kann zumindest das Zentraldifferential 10 gesperrt werden, wenn der Streckenabschnitt eine Steigung aufweist. Alternativ oder optional ergänzend kann das Vorderachs- und/oder das Hinterachsdifferential 8, 9 gesperrt werden, wenn der Streckenabschnitt Glatteis oder einen losen Untergrund aufweist. Das Berechnungsmodul 15 kann zudem ausgebildet sein, die Statusinformation des vorausfahrenden Fahrzeugs bei der Berechnung des Streckenabschnitts zu berücksichtigen.

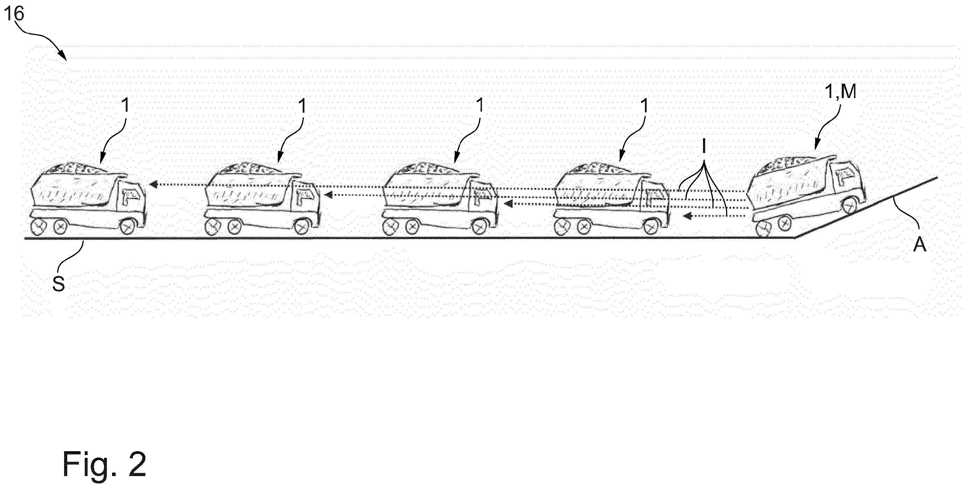

Figur 2 zeigt in einer stark schematisierten Darstellung eine Fahrzeugkolonne 16 mit mehreren der in der der Figur 1 beschriebenen Fahrzeugen 1. Die Fahrzeuge 1 sind hintereinander entlang einer Fahrstrecke S angeordnet und können beispielsweise in regelmäßigen Abständen die Fahrstrecke S abfahren. Die Fahrzeuge 1 oder zumindest ein Teil der Fahrzeuge 1 können durch einen Fahrer und/oder autonom gesteuert werden. Die Fahrzeuge 1 weisen jeweils das in der Figur 1 beschriebene Antriebssystem 1 auf, wobei die Fahrzeuge 1 jeweils über ein fahrzeugeignes Kommunikationsmodul 14 drahtlos untereinander kommunizieren können.

Dabei können die in der Fahrzeugkolonne 16 fahrenden Fahrzeuge 1 untereinander ihre Fahrdaten, wie z.B. Fahrzeugposition, Fahrzeuggeschwindigkeit, Fahrzeugabstand etc., über die Kommunikationsmodule 14 austauschen. In dem gezeigten Ausführungsbeispiel ist das anführende Fahrzeug 1 ein "Master"-Fahrzeug, wobei zu Beginn der Kolonnenfahrt den anderen Fahrzeugen 1 mitgeteilt wird, welches der Fahrzeuge 1 als "Master"-Fahrzeug M fungiert und somit die Fahrstrecke S zuerst befährt. Beispielsweise sendet das "Master"-Fahrzeug M bzw. das Kommunikationsmodul 14 den aktuellen Status seiner Sperreinrichtungen 11 als eine Statusinformation I entlang einer Funkstrecke zyklisch zu den anderen Fahrzeugen 1 der Kolonne 16.

Erreicht das "Master"-Fahrzeug M einen Streckenabschnitt A an dem mindestens eine der Sperreinrichtungen 11 betätigt werden soll, schaltet die Steuerungseinrichtung 13 des "Master"-Fahrzeug M die entsprechende Sperreinrichtung 11 automatisch zu. Zudem kann jederzeit, unabhängig von dem Streckenabschnitt A, mindestens eine der Sperreinrichtungen 11 automatisch betätigt werden, wenn z.B. ein Schlupf an den Rädern auftritt oder ein anderes Ereignis eine Betätigung von mindestens einer der Sperreinrichtungen 11 erfordert.

Bei Betätigung der Sperreinrichtung 11 des "Master"-Fahrzeugs M, wird diese Aktivierung als Statusinformation I von dem "Master"-Fahrzeug M an die nachfahrenden Fahrzeuge 1 gesendet. Aufgrund dieser Information aktivieren auch die anderen Fahrzeuge 1 der Kolonne 16 entsprechend ihre Sperreinrichtungen 11. Die Sperreinrichtungen 11 der Fahrzeuge 1 bleiben vorzugsweise nur so lange aktiv, wie sich das jeweilige Fahrzeug 1 innerhalb des Streckenabschnitts S befindet und/oder eine entsprechende Drehzahldifferenz detektiert wird. Sobald das jeweilige Fahrzeug 1 den Streckabschnitt A verlässt und/oder die Sperreinrichtungen 11 nicht mehr benötigt werden, werden diese automatisch wieder geöffnet. Die beschriebenen Funktionen sind dabei unabhängig ob die Fahrzeuge 1 für die Kolonnenfahrt automatisiert oder von einem Fahrer bewegt werden.

Das Berechnungsmodul 15 der nachfahrenden Fahrzeuge kann zudem auf Basis der Statusinformation I und unter Berücksichtigung der fahrzeugeigenen Fahrdaten berechnen, wann die entsprechenden Sperreinrichtungen 11 zugeschaltet werden müssen. Vorzugsweise erfolgt die Zuschaltung kurz vor Erreichen des Streckenabschnitts A bzw. bevor ein Schlupf an den Rädern des Fahrzeugs auftritt, sodass die Sperreinrichtungen 11 voreilend bei niedrigen Differenzdrehzahlen zugeschaltet werden können. Bei längeren Kolonnen 16 kann für jedes der nachfolgenden Fahrzeuge 1 eine eindeutige Position in der Kolonne 16 in dem Berechnungsmodul 15 hinterlegt sein, wobei beispielsweise anhand der Drehzahl und/oder Geschwindigkeit die Distanz zu dem "Master"-Fahrzeug M und/oder zu dem Streckenabschnitt A kalkuliert und somit eine Zuschaltung der fahrzeugeigenen Sperreinrichtung 11 im optimalen Bereich berechnet werden kann.

Alternativ kann auch vorgesehen sein, dass alle Fahrzeuge 1 untereinander den Status der eigenen Sperreinrichtung 11 kommunizieren können, wobei hierzu kein "Master"-Fahrzeug M definiert werden muss, sondern nur die Gruppe. Falls eines der Fahrzeug 1 der Kolonne 16 seine Sperreinrichtungen 11 auslöst wird dies den anderen Fahrzeugen 1 als die Statusinformation I mitgeteilt. Je nach Abstand und/oder Fahrrichtung zu dem Fahrzeug 1, berechnet anschließend jedes Fahrzeug 1 bzw. das zugehörige Berechnungsmodul 15 ob und wann eine Reaktion, insbesondere eine Betätigung der eigenen Sperreinrichtungen 11 ausgelöst werden muss.

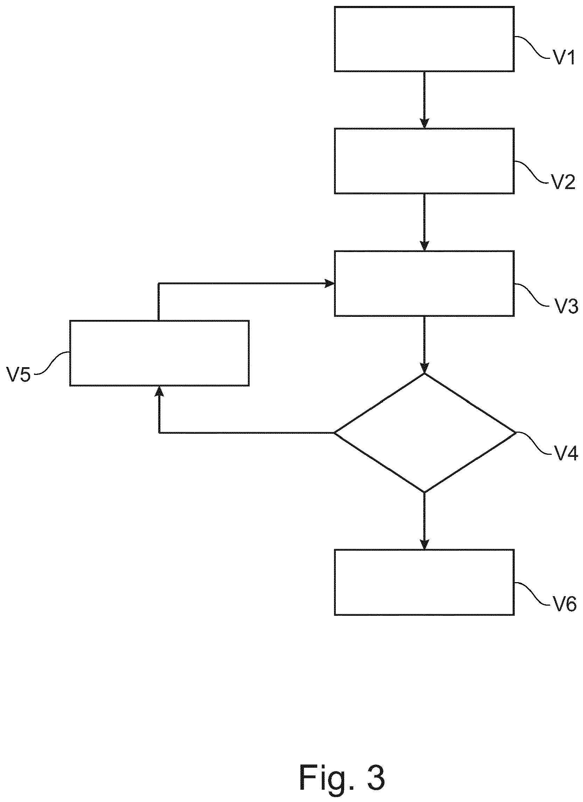

Figur 3 zeigt einen beispielhaften Ablauf eines Verfahrens zur automatischen Betätigung der in den Figuren 1 und 2 beschrieben Sperreinrichtungen 11 während einer Kolonnenfahrt anhand eines Ablaufdiagramms. Zur Durchführung des Verfahrens erfolgt zunächst in einem ersten Schritt V1 eine selbstständige Aktivierung mindestens einer der Sperreinrichtungen 11 durch die Steuerungseinrichtung 13 von einem der Fahrzeuge 1, insbesondere von dem "Master"-Fahrzeug M.

Das entsprechende Fahrzeug 1 teilt in einem zweiten Verfahrensschritt V2 den geänderten Status seiner Sperreinrichtung 11 als die Statusinformation I den anderen Fahrzeugen 1 der Kolonne 16 mit. Wird die Sperreinrichtung 11, z.B. bei einem auftretenden Schlupf an den Antriebsrädern, betätigt, umfasst die gesendete Statusinformation I des entsprechenden Fahrzeugs 1, dass die Sperreinrichtung 11 aktiviert bzw. das zugehörige Differentialgetriebe 8, 9, 10 gesperrt wurde. Neben dem aktuellen Zustand der Sperreinrichtung 11 kann die Statusinformation I zudem enthalten, welche Sperreinrichtung 11 betätigt bzw. welches Differentialgetriebe 8, 9, 10 gesperrt oder geöffnet werden muss.

Anschließend erfolgt in einem dritten Verfahrensschritt V3 eine Berechnung einer Distanz zu dem Streckenabschnitt A an dem die Sperreinrichtung 11 der nachfahrenden Fahrzeuge betätigt werden soll. Diese Berechnung erfolgt für jedes Fahrzeug 1 der Kolonne 16 einzeln und in Abhängigkeit der fahrzeugeigenen Fahrdaten. Dabei kann in dem Berechnungsmodul 15 für jedes Fahrzeug 1 ein Schwellenwert hinterlegt sein, wobei die zugehörige Sperreinrichtung 11 betätigt wird, wenn der Schwellenwert unterschritten wird.

In einem vierten Verfahrensschritt V4 erfolgt eine Abfrage ob der Schwellenwert, insbesondere eine festgelegte Distanz zu dem Streckenabschnitt A, erreicht wurde. Ist der Schwellenwert nicht unterschritten bzw. ist die aktuelle Distanz nicht unter dem festgelegten Limit, wartet das Berechnungsmodul 15 in einem fünften Verfahrensschritt V5 für eine gewisse Zeitdauer, z.B. 1 Sekunde, bis der Verfahrensschritt V3 wiederholt wird. Die Verfahrensschritte V3 bis V5 werden dabei solange wiederholt, bis der Schwellenwert unterschritten ist bzw. die Distanz des Fahrzeugs unterhalb des festgelegten Limits ist. Anschließend wird in einem sechsten Verfahrensschritt V6 die fahrzeugeigene Sperreinrichtung 11 betätigt.

Das in der Figur 3 beschriebene Verfahren kann in jeder Steuerungseinrichtung 13 der einzelnen Fahrzeuge hinterlegt sein, wobei die Verfahrensschritte V1 bis V6 unabhängig von der Position der anderen Fahrzeuge 1 in der Kolonne 16 abgearbeitet werden können.

### Bezugszeichen

- 1: Fahrzeug
- 2: Antriebssystem
- 3: Antriebsmaschine
- 4: Vorderachse
- 5: Hinterachse
- 6: Fahrzeugräder
- 7: Verteileranordnung
- 8: Vorderachsdifferential
- 9: Hinterachsdifferential
- 10: Zentraldifferential
- 11: Sperreinrichtung
- 12: Antriebswelle
- 13: Steuerungseinrichtung
- 14: Kommunikationsmodul
- 15: Berechnungsmodul
- 16: Fahrzeugkolonne

- A: Streckenabschnitt
- I: Statusinformation
- M: "Master"-Fahrzeug
- S: Fahrstrecke
- V1-V6: Verfahrensschritte

## Patentansprüche

1. Antriebssystem (2) für ein Fahrzeug (1)
mit einer Verteileranordnung (7) zur Verteilung eines Antriebsmoments auf mindestens zwei Antriebsräder (6) und/oder auf zwei Achsen (4, 5) des Fahrzeugs (1), wobei die Verteileranordnung (7) mindestens eine Sperreinrichtung (11) zur Sperrung der Verteileranordnung (7) aufweist,
mit einer Steuerungseinrichtung (13) zur Steuerung der Sperreinrichtung (11), wobei die Steuerungseinrichtung (13) ausgebildet ist, die Sperreinrichtung (11) auf Basis einer Drehzahldifferenz automatisch zu betätigen,
**dadurch gekennzeichnet, dass**
die Steuerungseinrichtung (13) ein Kommunikationsmodul (14) aufweist, wobei das Kommunikationsmodul (14) ausgebildet ist, eine Statusinformation (I) der Sperreinrichtung (11) mit mindestens einem nachfahrenden und/oder mindestens einem vorausfahrenden Fahrzeug zu kommunizieren.

2. Antriebssystem (2) nach Anspruch 1, **dadurch gekennzeichnet, dass** das Kommunikationsmodul (14) ausgebildet ist, die Statusinformation (I) der fahrzeugeigenen Sperreinrichtung (11) an das nachfahrende und/oder das vorausfahrende Fahrzeug zu übermitteln.

3. Antriebssystem (2) nach Anspruch 1 oder 2, **dadurch gekennzeichnet, dass** Kommunikationsmodul (14) ausgebildet ist, eine Statusinformation (I) einer Sperreinrichtung des nachfahrenden und/oder des vorausfahrenden Fahrzeugs zu empfangen und diese bei einer Betätigung der fahrzeugeignen Sperreinrichtung (11) zu berücksichtigen.

4. Antriebssystem (2) nach einem der vorhergehenden Ansprüche, **dadurch gekennzeichnet, dass** die Steuerungseinrichtung (13) ein Berechnungsmodul (15) aufweist, wobei das Berechnungsmodul (15) ausgebildet ist, einen Streckenabschnitt (A) zu bestimmen an dem die Sperreinrichtung (11) betätigt werden soll, wobei die Steuerungseinrichtung (13) ausgebildet ist, die Sperreinrichtung (11) vor Erreichen des Streckenabschnitts (A) zu betätigen.

5. Antriebssystem (2) nach Anspruch 4, **dadurch gekennzeichnet, dass** das Berechnungsmodul (15) ausgebildet ist, den Streckenabschnitt (A) basierend auf einer Statusinformation (I) von mindestens einem vorausfahrenden und/oder mindestens einem nachfahrenden Fahrzeug und unter Berücksichtigung von fahrzeugeigenen Fahrdaten zu ermitteln.

6. Antriebssystem (2) nach einem der vorhergehenden Ansprüche, **dadurch gekennzeichnet, dass** die Sperreinrichtung (11) als eine Klauenkupplung ausgebildet ist.

7. Antriebssystem (2) nach einem der vorhergehenden Ansprüche, **dadurch gekennzeichnet, dass** die Verteileranordnung (7) mindestens ein Differentialgetriebe (8, 9, 10) aufweist, wobei die Sperreinrichtung (11) als eine Differentialsperre zur Sperrung des Differentialgetriebes (8, 9, 10) ausgebildet ist.

8. Antriebssystem (2) nach einem der vorhergehenden Ansprüche, **dadurch gekennzeichnet, dass** die Verteileranordnung (7) mehrere der Sperreinrichtungen (11) aufweist, wobei die Steuerungseinrichtung (13) ausgebildet ist, die Sperreinrichtungen (11) auf Basis einer Drehzahldifferenz automatisch zu betätigen, und wobei das Kommunikationsmodul (14) ausgebildet ist, jeweils den Status der einzelnen Sperreinrichtungen (11) als die Statusinformation (I) mit dem mindestens einem nachfahrenden und/oder dem mindestens einem vorausfahrenden Fahrzeug zu kommunizieren.

9. Verfahren zur automatischen Betätigung einer Sperreinrichtung (11) bei einer Kolonnenfahrt von mehreren Fahrzeugen (1) mit dem Antriebssystem (2), nach einem der vorhergehenden Ansprüche, bei dem:
- eine Sperreinrichtung (11) einer Verteileranordnung (7) eines Fahrzeuges (1) auf Basis einer Drehzahldifferenz automatisch betätigt wird;
- eine Statusinformation (I) bezüglich der Sperreinrichtung (11) an mindestens ein nachfahrendes und/oder an mindestens ein vorausfahrendes Fahrzeug übermittelt wird.

10. Verfahren nach Anspruch 9, **dadurch gekennzeichnet, dass** ein anführendes Fahrzeug (1) einer Fahrzeugkolonne (16) als ein "Master"-Fahrzeug (M) festgelegt wird, wobei das "Master"-Fahrzeug (M) die Statusinformation seiner Sperreinrichtung (11) an die nachfahrenden Fahrzeuge (1) übermittelt, wobei bei einer Betätigung der Sperreinrichtung (11) des "Master"-Fahrzeugs (M), die Sperreinrichtung (11) des mindestens einen nachfahrenden Fahrzeugs (1) basierend auf der übermittelten Statusinformation (I) automatisch betätigt wird.

11. Verfahren nach Anspruch 8 oder 9, **dadurch gekennzeichnet, dass** alle Fahrzeuge (1) einer Fahrzeugkolonne (16) untereinander kommunizieren, wobei bei einer Betätigung einer Sperreinrichtung (11) von einem der Fahrzeuge (1), eine Statusinformation (I) der Sperreinrichtung (11) an die anderen Fahrzeuge (1) der Fahrzeugkolonne (16) übermittelt wird, wobei die Sperreinrichtung der nachfahrenden und/oder der vorausfahrenden Fahrzeuge (1) basierend auf der Statusinformation (I) automatisch betätigt wird.

12. Verfahren nach einem der Ansprüche 9 bis 11, **dadurch gekennzeichnet, dass** ein Streckenabschnitt (A) für die nachfahrenden Fahrzeuge bestimmt wird, an dem die zugehörige Sperreinrichtung betätigt werden soll, wobei die jeweils zugehörige Sperreinrichtung der nachfahrenden Fahrzeuge vor Erreichen des Streckenabschnitts (A) betätigt wird.
